# EUROPEAN PATENT APPLICATION

(11) **EP 3 944 794 A1**
(43) Date of publication of application: **02.02.2022**
(21) Application number: 21188097.6
(22) Date of filing: 27.07.2021
(51) Int. Cl.: A47J 37/06, A47J 36/38

(54) **AIR FRYER**

(30) Priority: 28.07.2020 CN 202021521495 U
(71) Applicant: Daka Research Inc., VG1110 Tortola (VG); Cixi Homease Electrical Products Co., Ltd., Cixi, Zhejiang 315300 (CN)
(72) Inventor: Chow, Jesse, Vancouver, British Columbia, V5K1K5 (CA)
(74) Representative: Wang, Bo

(57) **Abstract**

The utility model,relating to an air fryer,is comprised of a lid, an inner pot, a pot body and a baking device. The lid is connected to the pot body, and the inner pot is placed in the pot body. The mentioned lid includes an outer lid and an inner lid. The mentioned inner lid is placed in the inner cavity of the outer lid and an exhaust channel is arranged between the inner lid and the outer lid. One end of the exhaust channel passes through the inner lid to connect with the inner cavity of the pot body, while the other end of the exhaust channel passes through the outer lid to connect with the outside. The outer edge of the inner lid is provided with seal silica gel; The mentioned baking device includes a motor, a motor bracket, a reflector, a heating tube, a cooling fan, and a heat collecting fan. The mentioned motor bracket is arranged between the outer lid and the inner lid. The mentioned heat collecting fan is placed in the inner cavity of the inner lid and the motor is placed on the motor bracket.The rotating shaft of the motor passes through the motor bracket and the inner lid in turn to connect with the cooling fan and the heat collecting fan. The motor drives the cooling fan and the heat collecting fan to rotate.When food is baked at a set temperature, it tastes better.

## Description

### Technical Field

The utility model relates to an air fryer.

### Background Technology

The air fryer uses a high-speed air circulation technology to quickly heat the air through the top baking device.A rapid circulating heat flow inside the food basket is formed by a high-power fan and then a crispy surface layer on the food surface is formed to lock the moisture inside the food so as to make the ordinary fried food fragrant and crispy. Little oily smoke appears in the preparation process.

Due to the poor seal effect of the existing air fryer, the heat is easily lost. As a result, the baked food fails to reach the set temperature value, the food tastes badly and it can't meet the user's needs.

### Content of utility model

The utility model intends to provide an air fryer that is proud of a good seal effect and cannot lose heat.

The purpose of the utility model is achieved as follows:
An air fryer is comprised of a lid, an inner pot, a pot body and a baking device. The lid is connected to the pot body, and the inner pot is placed in the pot body.

The mentioned lid includes an outer lid and an inner lid. The mentioned inner lid is placed in the inner cavity of the outer lid and an exhaust channel is arranged between the inner lid and the outer lid. One end of the exhaust channel passes through the inner lid to connect with the inner cavity of the pot body, while the other end of the exhaust channel passes through the outer lid to connect with the outside. The outer edge of the inner lid is provided with seal silica gel;

The mentioned baking device includes a motor, a motor bracket, a reflector, a heating tube, a cooling fan, and a heat collecting fan. The mentioned motor bracket is arranged between the outer lid and the inner lid, and a circle of heat barrier ribs is provided on the outer edge of the motor bracket. The mentioned cooling fan is placed between the motor bracket and the inner lid, while the mentioned heat collecting fan is placed in the inner cavity of the inner lid and the motor is placed on the motor bracket. The rotating shaft of the motor passes through the motor bracket and the inner lid in turn to connect with the cooling fan and the heat collecting fan. The motor drives the cooling fan and the heat collecting fan to rotate.

The reflector is arranged in the inner cavity of the inner lid and below the heat collecting fan, while the mentioned heating tube is arranged in the inner cavity of the reflector.

The user places the food in the inner pot and fastens the lid on the pot body. At this time, the seal silica gel of the inner lid is tightly attached to the outer edge of the inner pot, and the heat barrier rib of the motor bracket is tightly attached to the outer edge of the inner pot to prevent the heat of the inner pot from being lost through the gap between the lid and the pot body. At this moment, the user can adjust the baking temperature. Since the lid and the pot body are sealed,the heat collecting fan transfer the heat to the inner pot.The heat stays at the bottom of the inner pot for more time, which improves thermal efficiency, accumulates heat and increases heat energy. The food is baked at the set temperature and the food is more delicious.

The purpose of the utility model can also be solved by the following technical measures: As a more specific solution, the motor bracket includes a bracket end face, a connecting rib and a heat barrier rib. The mentioned bracket end face is provided with a motor mounting area and a hole to facilitate the extension of the motor rotating shaft. The connecting rib is arranged between the end face of the bracket and the heat barrier rib, while the upper end of the connecting rib is connected to the end face of the bracket and its lower end is connected with the heat barrier rib, as well as an insulating inner wall is arranged between the heat barrier ribs.

The heat barrier ribs of the motor bracket are tightly attached to the outer edge of the inner pot to prevent the heat of the inner pot from being lost through the gap between the lid and the pot body, and the heat insulation inner wall isolates the heat to prevent the heat of the inner pot being lost when passing through the motor bracket, which greatly improves the seal effect of the air fryer and the heat insulation effect is better.

As a more specific solution, the inner lid is provided with a half-circle of seal silica gel along its outer edge.

As a more specific solution, it also includes an outer bottom ring that is sleeved on the inner lid. The outer bottom ring and inner lid together clamp the seal silica gel.

As a more specific solution, the lid is fastened on the pot body, and the seal silica gel is tightly attached to the outer edge of the inner pot. The seal silica gel of the inner lid is tightly attached to the outer edge of the inner pot to prevent the heat of the inner pot from being lost through the gap between the lid and the pot body, which greatly improves the seal effect of the air fryer and the heat insulation effect is better.

As a more specific solution, the lid is fastened on the pot body, and the heat barrier ribs of the motor bracket are tightly attached to the outer edge of the inner pot.

As a more specific solution, the heat collecting fan is a fan with high wind pressure. The heat collecting fan continuously transfers heat to the inner pot.The heat stays at the bottom of the inner pot for more time, which improves thermal efficiency, accumulates heat and increases heat energy. The food is baked at the set temperature and the food is more delicious.

As a more specific solution, the heating temperature of the heating tube is in the 100-260°C range.

The beneficial effects of the present utility model are described as follows: In the utility model, the user places the food in the inner pot and fastens the lid on the pot body. At this time, the seal silica gel of the inner lid is tightly attached to the outer edge of the inner pot, and the heat barrier rib of the motor bracket is tightly attached to the outer edge of the inner pot to prevent the heat of the inner pot from being lost through the gap between the lid and the pot body. At this moment, the user can adjust the baking temperature. Since the lid and the pot body are sealed,the heat collecting fan transfer the heat to the inner pot.The heat stays at the bottom of the inner pot for more time, which improves thermal efficiency, accumulates heat and increases heat energy. The food is baked at the set temperature and the food is more delicious.

### Description of the attached drawings

FIG. 1 is a schematic diagram of an air fryer.
FIG. 2 is a top view of the air fryer.
FIG. 3 is A-A cross-sectional view of FIG. 2.
FIG. 4 is an enlarged view of part B of FIG. 3.
FIG. 5 is an enlarged view of part C of FIG. 3.
FIG. 6 is an exploded view of the air fryer (the inner lid and the seal ring are connected).
FIG. 7 is an exploded view of the air fryer (the inner lid and the seal ring are separated).

### Specific implementation methods

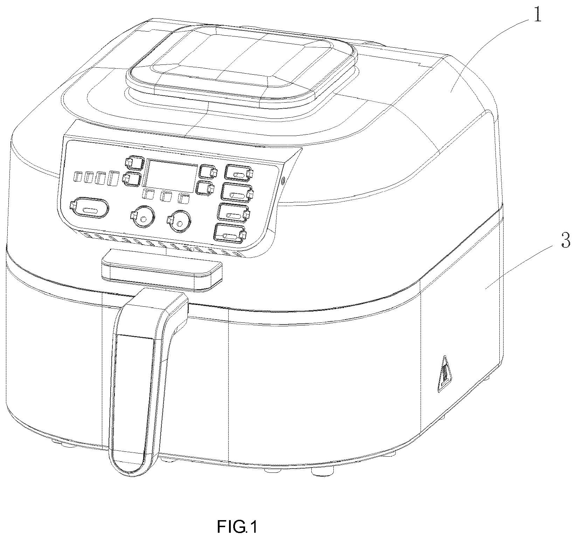

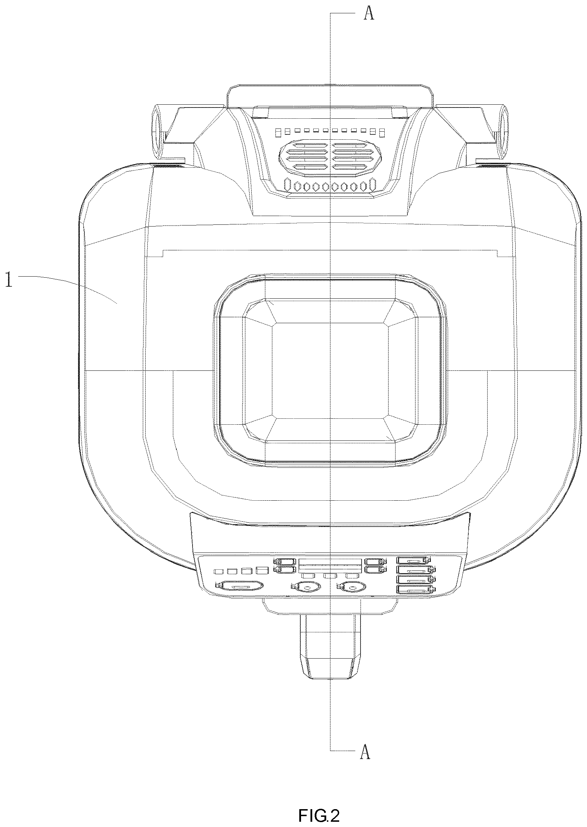

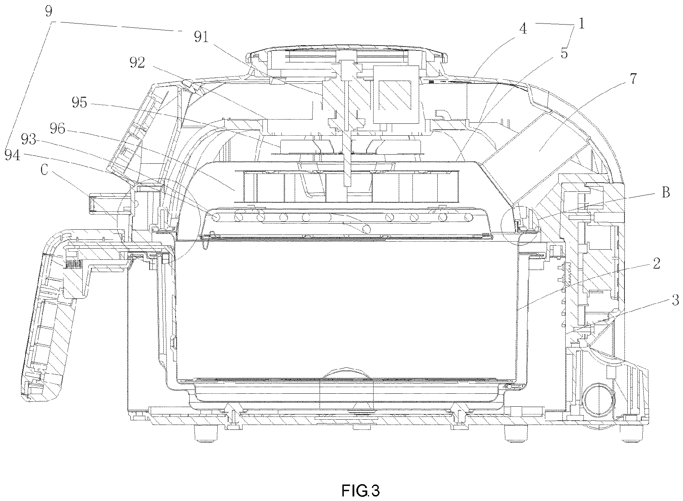

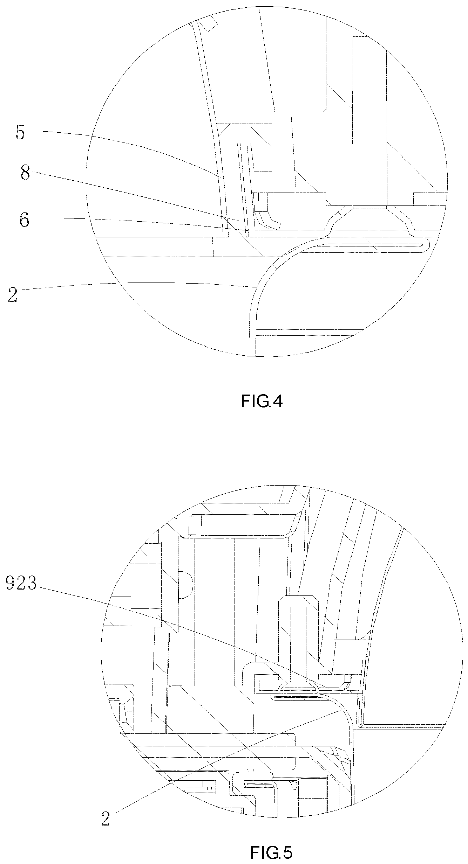

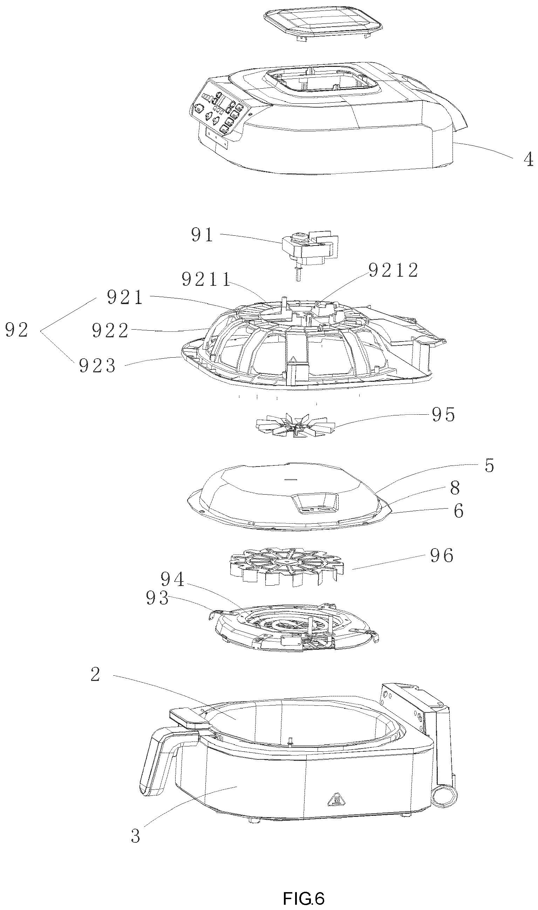

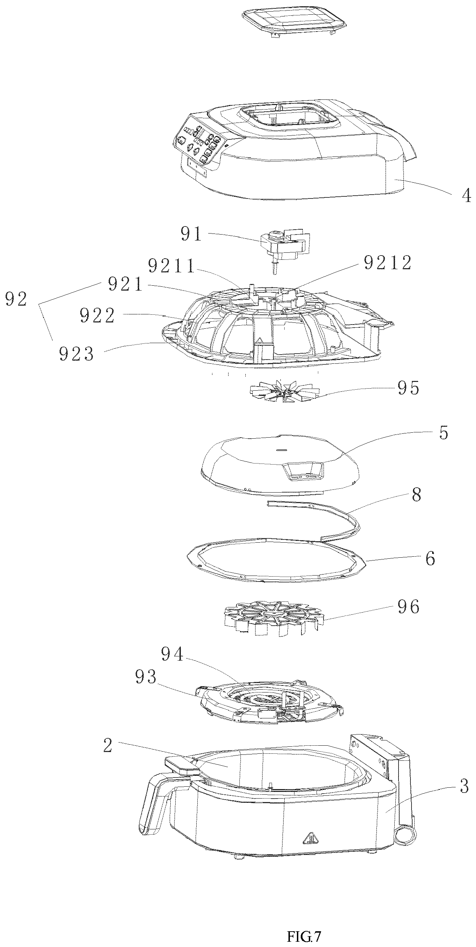

The utility model is further described by combining the attached drawings with the embodiments as follows:
Among embodiments, by combining Figures 1-7, an air fryer includes a lid 1, an inner pot 2, a pot body 3, and a baking device 9. The lid 1 is connected with the pot body 3, and the inner pot 2 is placed in the pot body 3.

The lid 1 includes an outer lid 4, an inner lid 5 and an outer bottom ring 6. An exhaust channel 7 is arranged between the inner lid 5 and the outer lid 4.One end of the exhaust channel 7 passes through the inner lid 5 to connect with the inner cavity of the pot body 3.The other end of the exhaust channel 7 passes through the outer lid 4 to connect with the outside. The outer edge of the inner lid 5 is provided with a half-circle of seal silica gel 8, the outer bottom ring 6 is sleeved on the inner lid 5, and the outer bottom ring 6 and the inner lid 5 clamp the seal silica gel 8.

The baking device 9 includes a motor 91, a motor bracket 92, a reflector 93, a heating tube 94, a cooling fan 95 and a heat collecting fan 96. The motor bracket 92 is arranged between the outer lid 4 and the inner lid 5. The motor bracket 92 includes a bracket end face 921, a connecting rib 922 and a heat barrier rib 923. The bracket end face 921 is provided with a motor mounting area 9211 and a hole 9212 to facilitate the extension of the rotating shaft in the motor 91. The connecting rib 922 is arranged between the bracket end face 921 and the heat barrier rib 923. The upper end of the connecting rib 922 is connected to the bracket end face 921, while the lower end of the connecting rib 922 is connected with the heat barrier rib 923. Moreover, a heat insulation inner wall 924 is provided between the heat barrier rib 923 and the heat barrier rib 923.

The cooling fan 95 is placed between the motor bracket 92 and the inner lid 5, and the heat collecting fan 96 is a fan with high wind pressure. The heat collecting fan 96 is placed in the inner cavity of the inner lid 5 and the motor 91 is placed on the motor bracket 92. The rotating shaft of the motor 91 passes through the motor bracket 92, the inner lid 5 in turn to connect with the cooling fan 95 and the heat collecting fan 96, and the motor 91 drives the cooling fan 95 and the heat collecting fan 96 to rotate.

The reflector 93 is arranged in the inner cavity of the inner lid 5 and below the heat collecting fan 96, and the heating tube 94 is arranged in the inner cavity of the reflector 93.

### Working principle:

The user puts the food in the inner pot 2 and fastens the lid 1 on the pot body 3. At this time, the seal silica gel 8 of the inner lid 5 is tightly attached to the outer edge of the inner pot 2 and the heat barrier rib 923 of the motor bracket 92 are tightly attached to the outer edge of the inner pot 2 to prevent the heat of the inner pot 2 from being lost through the gap between the lid 1 and the pot body 3. At this time, the user can adjust the baking temperature. The lid 1 and the pot 3 are tightly closed and the heat-collecting fan 96 continuously transfers heat to the inner pot 2. The heat stays at the bottom of the inner tank 2 for more time, which improves the heat efficiency, collects the heat and increases the heat energy. The food is baked at the set temperature and the food is more delicious. Since the temperature of the air fryer of the utility model can reach 260°C, the heat insulation effect of the air fryer can be enhanced and the temperature can be maintained by making a good seal structure. Moreover, the food is fried at 260°C to quickly lock the gravy of the food and make food more delicious.

## Claims

1. An air fryer is comprised of a lid, an inner pot, a pot body and a baking device. The lid is connected to the pot body, and the inner pot is placed in the pot body. It is **characterized in that** the mentioned lid includes an outer lid and an inner lid. The mentioned inner lid is placed in the inner cavity of the outer lid and an exhaust channel is arranged between the inner lid and the outer lid. One end of the exhaust channel passes through the inner lid to connect with the inner cavity of the pot body, while the other end of the exhaust channel passes through the outer lid to connect with the outside. The outer edge of the inner lid is provided with seal silica gel;
The mentioned baking device includes a motor, a motor bracket, a reflector, a heating tube, a cooling fan, and a heat collecting fan. The mentioned motor bracket is arranged between the outer lid and the inner lid, and a circle of heat barrier ribs is provided on the outer edge of the motor bracket. The mentioned cooling fan is placed between the motor bracket and the inner lid, while the mentioned heat collecting fan is placed in the inner cavity of the inner lid and the motor is placed on the motor bracket. The rotating shaft of the motor passes through the motor bracket and the inner lid in turn to connect with the cooling fan and the heat collecting fan. The motor drives the cooling fan and the heat collecting fan to rotate; the reflector is arranged in the inner cavity of the inner lid and below the heat collecting fan, while the mentioned heating tube is arranged in the inner cavity of the reflector.

2. The air fryer described in claim 1 is **characterized in that** the motor bracket includes a bracket end face, a connecting rib and a heat barrier rib. The mentioned bracket end face is provided with a motor mounting area and a hole to facilitate the extension of the motor rotating shaft. The connecting rib is arranged between the end face of the bracket and the heat barrier rib, while the upper end of the connecting rib is connected to the end face of the bracket and its lower end is connected with the heat barrier rib, as well as an insulating inner wall is arranged between the heat barrier ribs.

3. The air fryer described in claim 1 is **characterized in that** the inner lid is provided with a half-circle of seal silica gel along its outer edge.

4. The air fryer described in claim 3 is **characterized in that** it also includes an outer bottom ring that is sleeved on the inner lid. The outer bottom ring and inner lid together clamp the seal silica gel.

5. The air fryer described in claim 4 is **characterized in that** the lid is fastened on the pot body, while the seal silica gel is tightly attached to
the outer edge of the inner pot.

6. The air fryer described in claim 1 is **characterized in that** the lid is fastened on the pot body, and the heat barrier ribs of the motor bracket are tightly attached to the outer edge of the inner pot.

7. The air fryer described in claim 1 is **characterized in that** the heat collecting fan is a fan with high wind pressure.

8. The air fryer described in claim 1 is **characterized in that** the heating temperature of the heating tube is in 100-260°C range.
